# EUROPÄISCHE PATENTSCHRIFT

(11) **EP 1 243 804 B1**
(45) Veröffentlichungstag und Bekanntmachung des Hinweises auf die Patenterteilung: **19.05.2010**
(21) Anmeldenummer: 02004710.6
(22) Anmeldetag: 01.03.2002
(51) Int. Cl.: F16D 13/75

(54) **Selbsteinstellendes Kupplungsausrücklager**
Self-adjusting clutch release bearing
Butée d'embrayage autoréglable

(30) Priorität: 24.03.2001 DE 10114845
(43) Veröffentlichungstag der Anmeldung: 25.09.2002
(73) Patentinhaber: Schaeffler KG, 91074 Herzogenaurach (DE)
(72) Erfinder: Klöpfer, Bernhard, 91438 Bad Windsheim (DE); Dittmer, Steffen, 91074 Herzogenaurach (DE); Winkelmann, Ludwig, 91056 Erlangen (DE)

(56) Entgegenhaltungen:
- DE-A- 19 912 432
- DE-A- 19 949 909
- FR-A- 2 508 997
- GB-A- 2 052 671
- GB-A- 2 260 589
- US-A- 5 318 162

## Beschreibung

### Gebiet der Erfindung

Die Erfindung betrifft ein Ausrücklager gemäß dem Oberbegriff des Anspruchs 1, für eine vorzugsweise in Kraftfahrzeugen eingesetzte Schalttrennkupplung. Als Ausrücklager ist ein als Schrägschulterlager gestaltetes Wälzlager mit einem umlaufenden Außenring sowie einem drehstarr angeordneten Innenring vorgesehen. Zwischen den Lagerringen sind Wälzkörper in einem Wälzkörperkäfig geführt. An dem Außenring ist ein Einstellring abgestützt, welcher die Schalttrennkupplung mit dem Ausrücklager verbindet, wobei an der zur Schalttrennkupplung gerichteten Seite des Einstellrings eine Tellerfeder unmittelbar an einem Ringboden des Außenrings anliegt. Der Einstellring ist so gestaltet, dass dieser gegenüber dem Außenring des Ausrücklagers schwenkbar ist. Diese Anordnung ermöglicht ein selbsteinstellendes bzw. selbstjustierendes Ausrücklager, welches einen sogenannten Axialschlag kompensiert, der von der Schalttrennkupplung in das Ausrücklager übertragen wird. Der insbesondere von der Kupplungstellerfeder bzw. den Tellerfederzangen fertigungsbedingt ausgelöste Axialschlag, welcher durch die Wirkungsweise der Brennkraftmaschine verstärkt wird, erhöht den Verschleiß des Ausrücklagers und reduziert damit dessen Lebensdauer.

### Hintergrund der Erfindung

Aus der gattungsbildenden DE 199 12 432 A1 ist ein Ausrücklager bekannt an dessen umlaufenden Außenring ein Einstellring unmittelbar abgestützt ist. Dabei sind die Kontaktzonen zwischen diesen Bauteilen als Kugelkalottensegment gestaltet und dadurch gegeneinander schwenkbar. Die unmittelbar aneinander abgestützten Bauteile, der Einstellring und der Außenring sind aus Stahl hergestellt, wodurch sich die Gefahr einer Reibrostbildung verbunden mit einem erhöhten Verschleiß verstärkt. Ein hoher Verschleiß führt zu einer nachteiligen Geräuschentwicklung sowie einem komfortschädigenden Kupplungsrupfen. Außerdem verringert der erhöhte Verschleiß die von Fahrzeugherstellern geforderte Lebensdauer eines Ausrücklagers.

### Zusammenfassung der Erfindung

Der vorliegenden Erfindung liegt die Aufgabe zu Grunde, ein Ausrücklager mit einer höheren Lebensdauer zu realisieren, welches eine geräuschoptimierte und wartungsfreie Selbsteinstellung ermöglicht sowie kostengünstig herstellbar ist.

Diese Problemstellung wird gemäß der Erfindung durch ein Gleitelement gelöst, welches in einem Abstützbereich bzw. einer Kontaktzone zwischen dem Einstellring und dem umlaufenden Außenring des Ausrücklagers eingesetzt ist. Dabei ist das Gleitelement aus einem verschleißfesten hochtemperaturfesten Kunststoff hergestellt, der wartungsfrei eine hohe Lebensdauer sicherstellt. Einstellring und Außenring sind dabei spanlos als Tiefziehteile aus Stahl hergestellt. Diese Maßnahme verbessert entscheidend die Möglichkeit einer Selbsteinstellung der Bauteile Einstellring und Außenring aufgrund reduzierter Reibung. Gleichzeitig wird ein nachteiliges Kupplungsrupfen vermieden. Die optimierte Selbstjustierung dämpft weiterhin entscheidend die über die Schalttrennkupplung in das Ausrücklager eingeleiteten Axialschläge. Die Erfindung unterbindet die nachteilige zu Reibrost führende unmittelbare Abstützung der aus Stahl hergestellten Bauteile Einstellring und Innenring, gemäß bisheriger Lösungen. Das Gleitelement bewirkt eine wirksame Entkopplung und geräuschoptimierte Abstützung der Bauteile. In vorteilhafter Weise wird im eingebauten Zustand eine unmittelbare Anlage des Einstellrings an dem Außenring vermieden, wodurch eine wartungsfreie, reibungsarme und zugleich dämpfende Selbsteinstellung zwischen den gegeneinander schwenkbaren Bauteilen, dem Außenring und dem Einstellring sichergestellt ist. Das erfindungsgemäße Gleitelement ist so gestaltet, dass dieses weitestgehend ohne Anpassung der Bauteile, an denen das Gleitelement anliegt bzw. befestigt ist, eingesetzt werden kann und beansprucht vorteilhaft keinen vergrößerten Einbauraum. Die erfindungsgemäße Abstützung des Einstellrings an dem Außenring verhindert dauerhaft eine Reibrostbildung.

Der Verschleiß an den sphärischen bzw. als Kugelkalottensegment gestalteten Kontaktzonen zwischen dem Gleitelement und dem Außenring bzw. Einstellring reduziert sich dadurch im Vergleich zu bisherigen selbsteinstellenden Ausrücklagern entscheidend. Außerdem wird ein Kupplungsrupfen wirksam unterbunden, was sich positiv auf die Geräuschentwicklung auswirkt. Das erfindungsgemäße Gleitelement ist kostengünstig in großen Stückzahlen herstellbar und erfordert außerdem keine spezielle Handhabung für die Montage bzw. Befestigung an dem Einstellring oder dem Außenring des Ausrücklagers.

Weitere vorteilhafte Ausgestaltungen der Erfindung sind Gegenstand der abhängigen Ansprüche 2 bis 19.

Gemäß einer vorteilhaften Ausgestaltung der Erfindung ist das Gleitelement dem Außenring des Ausrücklagers befestigt. Dabei ist eine Ausgestaltung vorgesehen, bei der das Gleitelement den Außenring außenseitig vollständig umschließt und zur Erzielung eines geringen Ringspaltes ist das Gleitelement bis an die entsprechende Kontur des drehstarr angeordneten Innenrings geführt. Diese Maßnahme ermöglicht einen bauraum- und gewichtsoptimierten umlaufenden Außenring des Ausrücklagers, dessen Breite weitestgehend beschränkt ist auf die Laufbahn der Wälzkörper. Gleichzeitig gewährleistet das Gleitelement auf der zum Einstellring gerichteten Seite eine große Kontaktzone bzw. einen vergrößerten Abstützbereich für den Einstellring. Auch in extremen Schwenkpositionen ist damit eine ausreichende Kontaktzone bzw. ein ausreichender Abstützbereich der gegeneinander schwenkbaren Bauteile sichergestellt. Alternativ schließt die Erfindung ebenfalls ein unmittelbar an dem Einstellring befestigtes Gleitelement ein, das mit einem komplementär gestalteten Kugelkalottensegement an der Außenkontur des umlaufenden Außenrings des Ausrücklagers zusammenwirkt.

Die großflächige Anlage des Gleitelementes an dem Einstellring oder dem Außenring sichert in jeder Position, d. h. auch bei einer extrem verkippten Lage des Einstellrings, eine ausreichende Abstützung. Gleichzeitig gewährleistet die großflächige Anlage des Gleitelementes eine für die Festigkeit und Steifigkeit des Gleitelementes entscheidende verringerte Flächenpressung.

In weiterer Ausgestaltung der Erfindung ist vorgesehen, das Gleitelement anstelle einer ganzflächigen Anlage, segmentförmig an dem Außenring bzw. dem Einstellring anzuordnen. Diese Ausbildung verbessert die Haftung des Gleitelementes, da Spannungen aufgrund verschiedener Wärmeausdehnungskoeffizienten zwischen den unterschiedlichen Werkstoffen des Einstellrings oder des Außenrings einerseits und dem Gleitelement andererseits weitestgehend eliminiert werden.

Alternativ schließt die Erfindung zum Ausgleich von Spannungen, die aufgrund unterschiedlicher Wärmeausdehnungskoeffizienten auftreten, Gleitelemente ein, die zumindest mit einem der Symmetrieachse des Ausrücklagers übereinstimmenden Längsschlitz oder Nut versehen sind. Anstelle eines Schlitzes kann das Gleitelement auch mit mehreren umfangsverteilt angeordneten Schlitzen oder Nuten versehen werden, wobei diese vorteilhaft wechselweise an der Innen- oder der Außenseite des Gleitelementes vorgesehen sind oder sich durch die Wandung des Gleitelementes erstrecken. Die Erfindung schließt anstelle einer geradlinig verlaufenden Schlitzanordnung auch mäanderförmig oder schräg verlaufend im Gleitelement eingebrachte Schlitze ein.

Zur Erzielung reduzierter Herstellkosten ist gemäß der Erfindung vorgesehen, das Gleitelement durch Spritzgießen herzustellen. Dieses Verfahren bietet gleichzeitig die Möglichkeit, in einem Vorgang erforderliche Schlitze oder Nuten in das Gleitelement einzubringen.

Unabhängig von der Gestaltung des Gleitelementes bietet es sich an, dieses Bauteil formschlüssig an dem Einstellring oder dem Außenring des Ausrücklagers zu befestigen. Vorzugsweise ist dazu die zur Aufnahme des Gleitelementes vorgesehene Fläche an dem Einstellring bzw. dem Außenring mit Nuten versehen, in die Vorsprünge des Gleitelementes geführt sind bzw. darin verrasten. Diese Maßnahme sorgt gleichzeitig für eine wirksame Verdrehsicherung des Gleitelementes gegenüber dem Trägerbauteil.

Alternativ oder zusätzlich zu einer formschlüssigen Befestigung ist ebenfalls eine kraftschlüssige Befestigung des Gleitelementes vorgesehen, wozu sich insbesondere eine Verklebung des Gleitelementes an dem Einstellring oder dem Außenring anbietet. Bevorzugt wird dazu ein Hochtemperaturkleber eingesetzt, der auch geeignet ist, Unebenheiten zwischen der Aufnahmefläche an dem Einstellring bzw. dem Außenring und dem Gleitelement auszugleichen, wodurch eine nachteilige Hohlraumbildung wirksam unterbunden ist.

Gemäß einer weiteren Ausgestaltung der Erfindung ist als Gleitelement ein Belag vorgesehen, der unmittelbar auf die entsprechende Fläche des Einstellrings oder des Außenrings aufgespritzt wird. Diese Maßnahme bietet den Vorteil, dass Durchmessertoleranzen der zu paarenden Bauteile, des Außenrings und des Einstellrings entfallen. Zur Schaffung einer formschlüssigen Befestigung und wirksamen Verdrehsicherung bietet es sich dabei an, in die Trägerfläche eine Nut oder umlaufende Falte einzubringen, die beim Spritzgießen vom Material des Gleitelementes ausgefüllt, eine wirksame Fixierung des Gleitelementes bewirkt.

Die nach dem Spritzgießen auftretenden Schrumpfspannungen können dabei kompensiert werden, indem die Trägerfläche des Einstellrings oder des Außenrings mit zumindest einer achsparallelen oder schraubenförmig ausgestalteten Kerbnut versehen ist. Als Verdrehsicherung bietet es sich an, der Kerbnut diametral gegenüberliegend zumindest eine Fixiernut am Durchmesser und/oder in die Planfläche des Einstellrings oder des Außenrings zu formen, die gleichfalls beim Spritzgießen mit dem Material des Gleitelementes ausgefüllt wird.

Die Erfindung sieht vor, das Gleitelement einerseits und den Einstellring bzw. den Außenring andererseits aus unterschiedlichen Materialien herzustellen. Dabei wird der Werkstoff für das Gleitelement unter Berücksichtigung optimaler Verschleiß- und Reibungseigenschaften sowie günstiger Herstellung und Montage an dem Einstellring bzw. Außenring ausgewählt. Für das Trägerteil, den Einstellring bzw. Außenring wird als Werkstoff Stahl vorgesehen. Die konstruktive Gestaltung dieser Ringe ermöglicht dabei eine spanlose Herstellung über ein Tiefziehverfahren, mit dem diese Bauteile auch in hohen Losgrößen kostengünstig herstellbar sind. Zur Erzielung einer ausreichenden Festigkeit, insbesondere Verschleißfestigkeit, ist der Einstellring wie auch der Außenring zumindest in den Zonen hoher Beanspruchung, wie den Kugelkalottensegmenten, der Wälzkörperlaufbahn sowie der Kontaktfläche, an der sich die Tellerfeder der Schalttrennkupplung abstützt, wärmebehandelt.

Für das Gleitelement wird ein hochtemperaturfester, wie auch verschleißfester Kunststoff bevorzugt, insbesondere Duroplast. Weiterhin schließt die Ausrückvorrichtung Gleitelemente aus Duroplast ein, mit Zusätzen aus Kohlefaser, MoS₂-Anteilen bzw. Epoxidharzen, die gemeinsam oder teilweise zur Erzielung einer inkorporierten Schmierung mit Duroplast kombiniert sind. Derartige Duroplaste verbessern entscheidend die Gebrauchsdauer des Gleitelementes, ohne dabei nachteilig die Herstellkosten zu erhöhen. Alternativ bietet es sich an, ein Gleitelement aus PPA oder PA 46 einzusetzen, welches mit Kohlefasern als Verschleißminderer und PTFE-Anteilen als Reibungsminderer versetzt ist.

Gemäß der Erfindung ist weiterhin ein aus Keramik hergestelltes Gleitelement einsetzbar. Dieser auch als Industriekeramik zu bezeichnende Werkstoff zeichnet sich insbesondere durch eine hohe Verschleißfestigkeit aus und ist daher in Verbindung mit einer entsprechend verschleißfest gestalteten Kontaktfläche an dem Einstellring oder dem Außenring des Ausrücklagers geeignet, zur Erzielung einer hohen Lebensdauer auch in einem verschmutzungsbedingt rauhen Einsatz des Ausrücklagers.

Die Erfindung beschränkt sich nicht auf die zuvor genannten Werkstoffe bzw. Werkstoffkombinationen aus denen das Gleitelement hergestellt werden kann, sondern schließt auch Werkstoffe ein, deren Eigenschaften hinsichtlich der Reibung und des Verschleißverhaltens sowie der Verarbeitbarkeit und der Herstellkosten eine erfindungsgemäße Anwendung ermöglichen.

Als geeigneter Werkstoff für den Einstellring, der spanlos insbesondere durch ein Tiefziehverfahren hergestellt wird, bietet es sich an, als Stahl C80M zu verwenden, der für eine anschließende Warmbehandlung geeignet ist zur Erzielung einer verbesserten Verschleißfestigkeit.

Die Erfindung schließt außerdem zur Erzielung einer bauteiloptimierten Bauweise ein erfindungsgemäß gestaltetes Ausrücklager ein, bei dem das Gleitelement an dem Einstellring befestigt ist. Dabei bilden Gleitelement und Außenring in einer Kontaktzone bzw. einem Abstützbereich Kugelkalottensegmente. Ein derartig gestalteter Einstellring umfasst vorzugsweise einen aus Stahl hergestellten, radial ausgerichteten Ringflansch, an dem unmittelbar das beispielsweise aus Kunststoff hergestellte Gleitelement kraftschlüssig an dem Außenring befestigt ist. Für einen derartig gebauten Einstellring eignet sich ein in N-Profiltechnik mit einem axial gezogenen Spritzwerkzeug hergestelltes Gleitelement aus Duroplast. Dieser Werkstoff ermöglicht auch für eine derartige Gestaltung des Gleitelementes eine ausreichende Festigkeit und Formstabilität. Zur Befestigung bzw. Fixierung des Gleitelementes an dem aus Stahl hergestellten Ringflansch eignet sich eine Verklebung, die zur Erzielung einer formschlüssigen Verbindung außerdem beispielsweise Anprägungen des Gleitelementes vorsieht, welche in entsprechende Ausnehmungen des Ringflansches formschlüssig eingreifen.

Gemäß der Erfindung ist ebenfalls ein Einstellring einsetzbar, dessen Komponenten, Ringflansch und Gleitelement aus einem übereinstimmenden Werkstoff hergestellt sind. Dazu eignen sich beispielsweise die Werkstoffe Keramik oder Duroplast. Zur unlösbaren Verbindung dieser Einzelteile ist vorzugsweise eine Verklebung vorgesehen. Die Klebung kann durch eine formschlüssige Verbindung unterstützt werden, bei der das Gleitelement mittels einer Plankerbverzahnung und/oder einem Keilwellenprofil o. ä. mit dem Flansch verbunden ist, wodurch gleichzeitig eine größere Kontaktfläche entsteht, die neben einer Verdrehsicherung gleichzeitig eine verbesserte Klebung bewirkt. Zur Aufnahme von überschüssigem Klebstoff sind Vertiefungen bzw. Rillen an mindestens einer Fügfläche der zu paarenden Ringbereiche vorgesehen.

Eine weitere Maßnahme zur Erzielung einer bauteiloptimierten Lösung sieht vor, einen einteiligen, ausschließlich aus Duroplast oder Keramik hergestellten Einstellring mit dem Ausrücklager zu kombinieren. Ein derartig gestalteter Einstellring wie auch ein gebauter Einstellring, deren Bauteile aus gleichen Werkstoffen hergestellt sind.

Das erfindungsgemäße Ausrücklager schließt eine Verliersicherung ein, mit der nach einer Montage bzw. Komplettierung alle Bauteile des Ausrücklagers zusammengefügt sind. Dazu ist der umlaufende Außenring mit einer Hülse oder einem Halteblech versehen, welches sich axial bis über einen Anlagebereich des Einstellrings an dem Außenring erstreckt. Die Hülse oder das Halteblech ist dabei unter Einhaltung eines Ringspaltes beabstandet zum Einstellring geführt. Ein Endbereich der Hülse hintergreift eine Randzone, wodurch das Ausrücklager einschließlich des Einstellrings verliergesichert zusammengefügt ist.

Eine vorteilhafte Auslegung des erfindungsgemäßen Ausrücklagers sieht vor, dass die Kugelkalottensegmente in einem Winkel von ≧ 15° zu einer Symmetrieachse des Ausrücklagers angeordnet sind. Weiterhin bilden die kugelsegmentförmig gestalteten Bauteile im Bereich der Kontaktfläche einen Radius von ≧ 30mm.

### Kurze Beschreibung der Zeichnungen

Die Erfindung wird nachfolgend anhand von Ausführungsbeispielen näher erläutert und beschrieben. Es zeigen:
- Figur 1: in einem Halbschnitt das erfindungsgemäße Ausrücklager, bei dem der umlaufende Außenring von einem Gleitelement umschlossen ist, an dem außenseitig ein Einstellring abgestützt ist;
- Figur 2: ein alternativ zu Figur 1 gestaltetes Ausrücklager, dessen Gleitelement an dem umlaufenden Außenring verschnappt ist;
- Figur 3: eine Verliersicherung des Ausrücklagers, welche an dem drehstarr angeordneten Innenring des Ausrücklagers fixiert ist;
- Figur 4: eine weitere Variante eines erfindungsgemäßen Ausrücklagers, bei dem das Gleitelement gleichzeitig eine Verliersichtung für den Einstellring bildet;
- Figur 5: ein Ausrücklager, dessen Verliersicherung ein aus Blech geformtes, am drehstarren Innenring fixiertes Halteelement umfasst, das nahezu das gesamte Ausrücklager außenseitig umschließt und einen Endabschnitt des Einstellrings radial übergreift;
- Figur 6: ein Ausrücklager kombiniert mit einem Gleitelement, welches eine Verliersicherung für den Einstellring beinhaltet und außerdem bis auf einen Ringspalt bis an den drehstarren Innenring geführt ist;
- Figur 7: einen Außenring, an dem das Gleitelement sowie eine Verliersicherung formschlüssig befestigt ist;

### Detaillierte Beschreibung der Zeichnungen

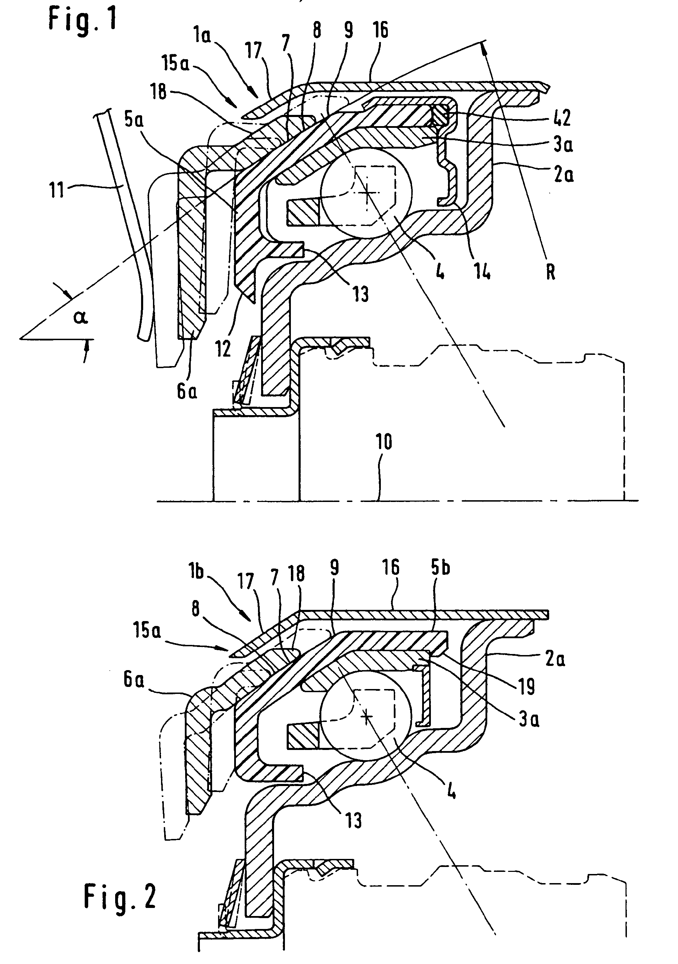

Die Figur 1 zeigt in einem Halbschnitt das Ausrücklager 1a, welches einen drehfest angeordneten Innenring 2a sowie einen umlaufenden Außenring 3a umfasst, zwischen denen Wälzkörper 4 geführt sind. Der Außenring 3a ist außenseitig von einem Gleitelement 5a umschlossen. Außenseitig stützt sich an dem Gleitelement 5a ein Einstellring 6a ab, wobei der Außenring 3a sowie der Einstellring 6a in einem Abstützbereich 7 Kugelkalottensegmente 8, 9 bilden. Der Abstützbereich 7 verläuft dabei unter einem Winkel "α" zu einer Symmetrieachse 10 des Ausrücklagers 1a. Die Kugelkalottensegmente bilden weiterhin im Abstützbereich einen Radius "R". An dem weitestgehend scheibenartig gestalteten Einstellring 6a der Figur 1 in einer Neutralstellung sowie in den beiden Extremstellungen abgebildet ist, d. h. in denen der Einstellring 6a zum Außenring 3a verschwenkt ist, stützt sich eine Tellerfeder 11 ab, die mittelbar oder unmittelbar mit der Schalttrennkupplung in Verbindung steht.

Das Gleitelement 5a bildet auf dem zum Einstellring 6a gerichteten Seite einen Schenkel 12, an dem sich ein axial in Richtung der Wälzkörper 4 ausgerichteter Bord 13 anschließt, der unter Einhaltung eines Ringspaltes bis an den Innenring 2a geführt ist. An dem vom Schenkel 12 abgewandten Ende des Gleitelementes 5a ist formschlüssig ein Abschirmblech 14 vorgesehen, welches ebenfalls unter Einhaltung eines Ringspaltes bis an den Innenring 2a geführt ist. Der Bord 13 des Gleitelementes 5a in Verbindung mit dem Abschirmblech 14 bewirken einen beiderseits der Wälzkörper 4 abgedichteten Innenraum des Ausrücklagers 1a. Das Ausrücklager 1a verfügt weiterhin über eine Verliersicherung 15a, bestehend aus einem am Innenring 2a lagefixierten Halteblech 16. Das weitestgehend zylindrisch gestaltete Halteblech 16 erstreckt sich axial bis über den Abstützbereich 7 zwischen dem Gleitelement 5a und dem Außenring 3a. Eine endseitige Abkantung 17 des Halteblechs 16 übergreift radial einen Endabschnitt 18 des Einstellrings 6a.

In den weiteren Figuren 2 bis 8 sind Varianten von Ausrücklagern dargestellt, deren Aufbau weitestgehend übereinstimmt mit dem Ausrücklager 1a gemäß Figur 1. Übereinstimmende Bauteile sind mit gleichen Bezugsziffern versehen, so dass zu deren Beschreibung auf die Beschreibung gemäß Figur 1 verwiesen werden kann.

Das Ausrücklager 1b gemäß Figur 2 ist abweichend zu Figur 1 mit einem an dem Außenring 3a formschlüssig befestigten Gleitelement 5b versehen. Dazu ist das Gleitelement 5b auf der vom Einstellring 6a abgewandten Seite mit einer Haltenase 19 versehen, welche im eingebauten Zustand an einer Stirnseite des Außenrings 3a verschnappt.

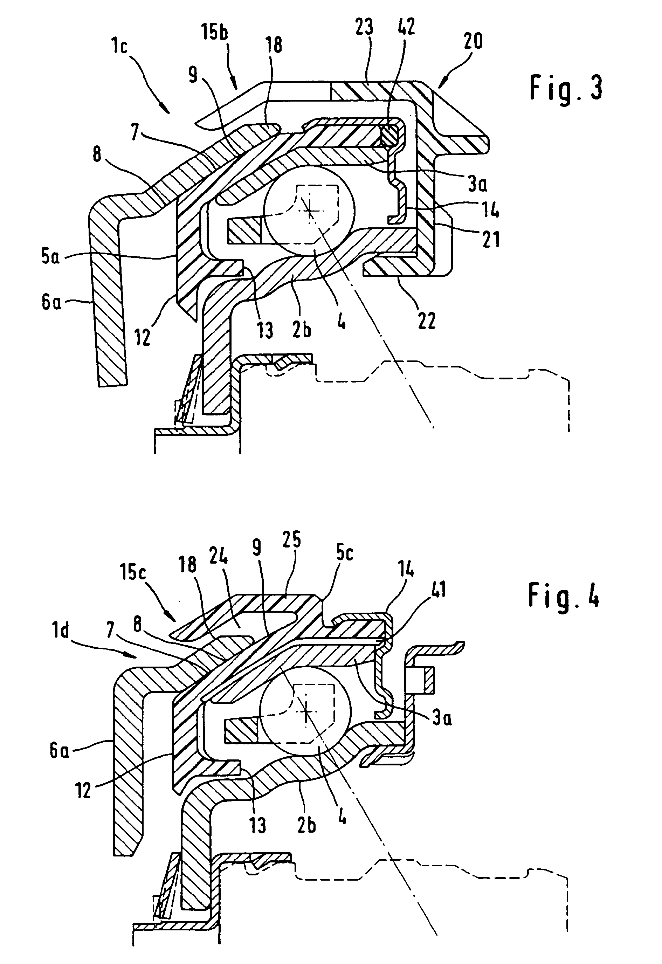

Das Ausrücklager 1c gemäß Figur 3 ist mit dem Gleitelement 5a versehen, welches durch das Abschirmblech 14 an dem Außenring 3a befestigt ist, vergleichbar der Figur 1, jedoch zusätzlich zur besseren Abdichtung einen axial verpressten Dichtring 42 einschließt. Zur Schaffung einer Verliersicherung 15b ist das Ausrücklager 1c mit einem Halteelement 20 versehen, welches ein weitestgehend U-förmiges Querschnittsprofil aufweist und mit einem inneren Schenkel 22 an einem axial vorstehenden Abschnitt des Innenrings 2b befestigt ist. An den Schenkel 22 schließt sich ein radial ausgerichteter Abschnitt 21 an, welcher das Ausrücklager 1b stirnseitig abdeckt. Ein weiterer äußerer Schenkel 23 des Halteelementes 20 erstreckt sich axial bis über den Abstützbereich 7 zwischen dem Einstellring 6a und dem Gleitelement 5a. Dabei ist ein Endbereich des Schenkels 23 radial nach innen abgekantet und übergreift teilweise den Einstellring 6a.

Das Ausrücklager 1d gemäß Figur 4 umfasst das Gleitelement 5c, welches einen weitestgehend parallel zum Abstützbereich 7 verlaufenden außenliegenden Schlitz 24 bildet, in denen der Endabschnitt 18 des Einstellrings 6a eingreift. Eine äußere Wandung 25 von dem Schlitz 24 verläuft dabei beabstandet zu dem Endabschnitt 18 und bewirkt eine radiale Überdeckung zur Erzielung einer Verliersicherung 15c. Ein zu dem Außenring 3a weisender Nut 41 des Gleitelementes 5c dient zum Ausgleich von Spannungen die aufgrund von unterschiedlichen Wärmeausdehnungskoeffizienten der Werkstoffe des Gleitelementes 5c und des Außenrings 3a auftreten. Die Nut 41 ist weiterhin zur Aufnahme von Schmierstoff und/oder Verschleißpartikeln nutzbar.

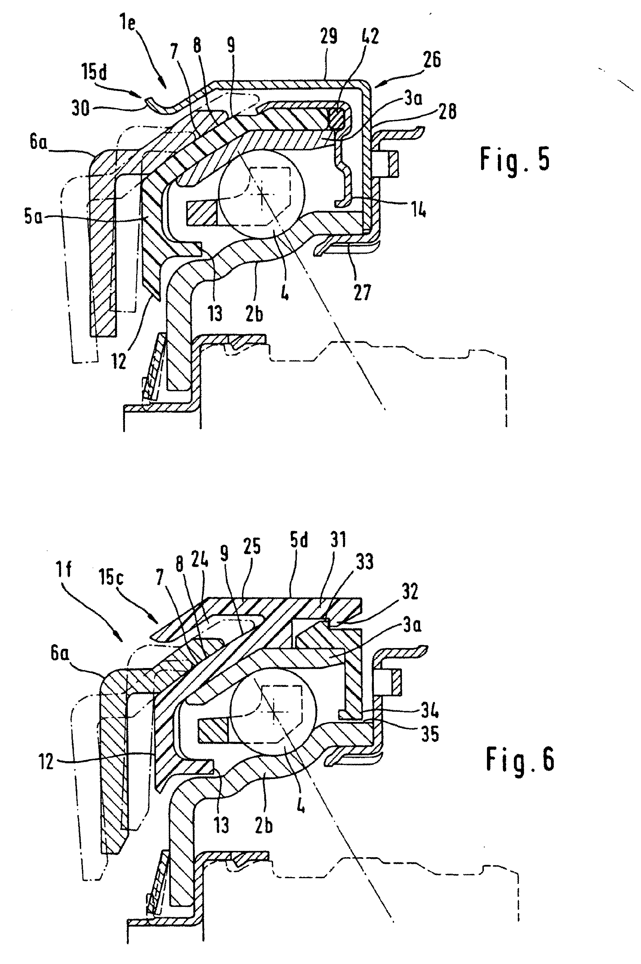

Die Figur 5 zeigt das Ausrücklager 1e, welches zur Schaffung einer Verliersicherung 15d mit einem aus Blech geformten Halteelement versehen ist. Dieses vergleichbar dem Halteelement 20 gemäß Figur 3 aufgebaute Halteelement 26 umfasst ein inneres Z-förmig gestaltetes, an dem Innenring 2b befestigtes Halteblech 27, an dem sich ein Winkelblech 28 anschließt, das zunächst in einem radialen Abschnitt das Ausrücklager 1e stirnseitig abschirmt und ein äußerer, zylindrischer Schenkel 29 sich axial bis über den Abstützbereich 7 zwischen dem Einstellring 6a und dem Außenring 3a erstreckt. An dem freien Ende bildet der Schenkel 29 des Winkelblechs 28 eine radial nach innen gerichtete Abkantung, die Verliersicherung 15d, welche mit einem endseitigen nach außen gerichteten Bördelradius 30 versehen ist, der bei einer Montage des Einstellrings 6a ein gewünschtes radiales Ausweichen ermöglicht und damit die Montage vereinfacht.

Das Ausrücklager 1f gemäß Figur 6 zeigt das Gleitelement 5d, welches übereinstimmend mit dem in Figur 4 abgebildeten Gleitelement 5c einen Schlitz 24 zur Schaffung einer Verliersicherung 15c aufweist. Weiterhin ist das Gleitelement 5d mit einem vom Schlitz 24 abgewandten, axial vorstehenden Bord 31 versehen, welcher endseitig radial innen mit einer umlaufenden oder segmentartig angeordneten Haltenase 32 versehen ist. In der Einbaulage verschnappt die Haltenase 32 an einem Nocken 33 eines scheibenartig geformten Dichtungselementes 34. Das winkelförmig gestaltete Dichtungselement 34 umschließt außenseitig axial begrenzt den Außenring 3a und erstreckt sich radial unter Einhaltung eines Ringspaltes 35 bis an den Innenring 2b.

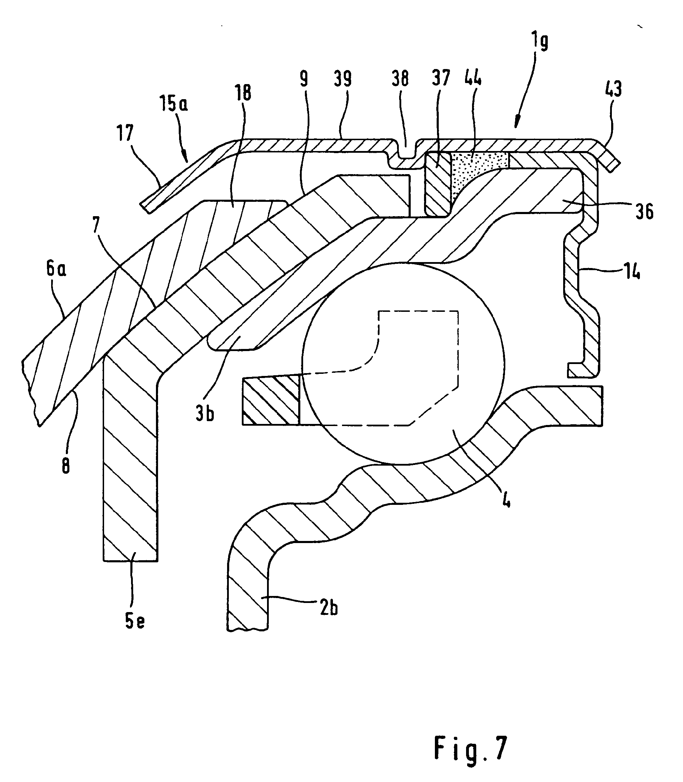

Die Figur 7 zeigt das Ausrücklager 1g, dessen Außenring 3b an dem vom Gleitelement 5e abgewandten Ende eine radial nach außen gerichtete Stufe 36 aufweist. An der Stufe 36 stützt sich ein Haltering 37 ab, welcher außenseitig von einer Blechhülse 39 umschlossen ist, die das Ausrücklager 1g außenseitig umschließt und dabei an dem einen Ende die Verliersicherung 15a bildet. Gegenseitig sichert die Blechhülse 39 formschlüssig das an dem Außenring 3b angeordnete Abschirmblech 14, welches zur Abdichtung des Wälzkörperinnenraums dient und sich radial bis an den Innenring 2b erstreckt. Dabei ist die Blechhülse 39 mittels einer umlaufenden Sicke 38 an dem Haltering 37 lagepositioniert. Durch ein Umbördeln der Bördelstufe 43 nach einer Komplettierung sind alle Bauteile des Ausrücklagers 1g zu einer unverlierbaren Einheit zusammengefasst. Eine verbesserte Abdichtung zwischen der Blechhülse 39 und dem Außenring 3b in einem von dem Abschirmblech 14 und dem Haltering 37 axial begrenzten Ringraum wird durch eine Dichtmasse 44 erreicht. Als Dichtmasse ist bevorzugt Silikon oder Acryl einsetzbar.

### Bezugszahlenliste

- 1 a - 1 h: Ausrücklager
- 2a - 2c: Innenring
- 3a - 3c: Außenring
- 4: Wälzkörper
- 5a - 5e: Gleitelement
- 6a: Einstellring
- 6b: Einstellring
- 7: Abstützbereich
- 8: Kugelkalottensegment
- 9: Kugelkalottensegment
- 10: Symmetrieachse
- 11: Tellerfeder
- 12: Schenkel
- 13: Bord
- 14: Abschirmblech
- 15: Verliersicherung
- 15a - 15e: Verliersicherung
- 16: Halteblech
- 17: Abkantung
- 18: Endabschnitt
- 19: Haltenase
- 20: Halteelement
- 21: Abschnitt
- 22: Schenkel
- 23: Schenkel
- 24: Schlitz
- 25: Wandung
- 26: Halteelement
- 27: Halteblech
- 28: Winkelblech
- 29: Schenkel
- 30: Bördelradius
- 31: Bord
- 32: Haltenase
- 33: Nocken
- 34: Dichtungselement
- 35: Ringspalt
- 36: Stufe
- 37: Haltering
- 38: Sicke
- 39: Blechhülse
- 40: Halteblech
- 41: Nut
- 42: Dichtring
- 43: Bördelstufe
- 44: Dichtmasse
- 45: Dichtring

## Patentansprüche

1. Ausrücklager, vorzugsweise für eine in Kraftfahrzeugen eingesetzte Schalttrennkupplung, bestehend aus einem als Schrägschulterlager gestalteten Wälzlager, das einen drehstarr angeordneten Innenring (2a, 2b ) und einen umlaufenden, rotierenden Außenring (3a, 3b) umfasst, sowie zwischen beiden Lagerringen geführte Wälzkörper (4), wobei dem Außenring (3a, 3b) ein Einstellring (6a) zugeordnet ist, an dessen Ringflansch sich eine ggf. mit der Schalttrennkupplung verbinbaren Tellerfeder (11) abstützt, wodurch die Bauteile Einstellring (6a) und Außenring (3a, 3b) gegeneinander schwenkbar sind, zur Erzielung eines selbstjusflerenden Ausrücklagers (1a bis 1g), ***dadurch gekennzeichnet, dass*** in einem komplementär gestalteten, Kugelkalotten-segmente (8, 9) bildenden Abstützbereich (7) zwischen dem Außenring (3a, 3b) und dem Einstellring (6a) ein aus einem Lagerwerkstoff hergestelltes Gleitelement (5a bis 5e) eingesetzt ist, *und dass der Einstellring (**6a**) und der Außenring (3a*, *3b) spanlos als ein Tiefziehteil aus Stahl hergestestellt sind, der mit dem aus einem verschleißfesten, hochtemperaturfesten Kunststoff hogesteltten Gleitelement (5a bis 5e) kombiniert ist.*

2. Ausrücklager nach Anspruch 1, wobei das Gleitelement (5a bis 5e) an dem Außenring (3a-3b) *befestigt* ist.

3. Ausrücklager nach Anspruch 1, bei der das Gleitelement (5c) segmentförmig in dem Abstützbereich (7) an dem Trägerbauteil, dem Außenring (3a) anliegt.

4. Ausrücklager nach Anspruch 1, in dessen Gleitelement (5c) an der Innenseite und/oder der Außenseite umfangsverteilt Nuten (41) eingebracht sind.

5. Ausrücklager nach Anspruch 1, dessen Gleitelement (5a bis 5e) durch ein Spritzgießverfahren hergestellt ist.

6. Ausrücklager nach Anspruch 1, bei der das Gleitelement (5a bis 5e) formschlüssig an dem Außenring (3a, 3b) befestigt ist.

7. Ausrücklager nach Anspruch 1, wobei das Gleitelement (5a bis 5e) als ein Belag auf den Außenring (3a, 3b) aufgespritzt ist.

8. Ausrücklager nach Anspruch 1, wobei das Gleitelement (5a bis 5e) und der Einstellring (6a) bzw. der Außenring (3a, 3b) aus unterschiedlichen Materialien hergestellt sind.

9. Ausrücklager nach Anspruch 8, bei dem das Gleitelement (5a bis 5e) aus einem Thermoplast oder einem Duroplast hergestellt ist.

10. Ausrücklager nach Anspruch *1*, dessen Gleitelement (5a bis 5e) Zusätze aus Kohlefaser, MoS₂ und Epoxidharze aufweist, die mit Duroplast kombiniert sind.

11. Ausrücklager nach Anspruch *1*, bei dem als Werkstoff PPA oder PA46 für das Gleitelement (5a bis 5e) vorgesehen ist, der mit Kohlefasern als Verschleißminderer und der mit PTFE als Reibungsminderer versetzt ist.

12. Ausrücklager nach Anspruch 8, das ein aus Keramik hergestelltes Gleitelement umfasst.

13. Ausrücklager nach Anspruch 1, wobei *das Gleitelement an dem Einstellring befestigt ist* und der Einstellring (6a) in dem Abstützbereich (7) ein komplementär gestaltetes Kugelkalottensegment (8) bildet.

14. Ausrücklager nach Anspruch 1, versehen mit einem gebauten Einstellring, bestehend aus einem der Tellerfeder (11) zugeordneten, radial ausgerichteten Ringflansch aus Stahl, an dem unmittelbar das Gleitelement aus Kunststoff oder Keramik befestigt ist.

15. Ausrücklager nach Anspruch 14, das einen aus Kunststoff oder aus Keramik hergestellten Einstellring (6a) umfasst.

16. Ausrücklager nach Anspruch 1, wobei in einer Einbaulage ein an dem Innenring (2a, 2b) oder dem Außenring (3a, 3b) befestigtes Halteblech (16), Halteelement (20, 26), einen Endabschnitt (18) des Einstellrings (6a) spielbehaftet *zur Bildung* einer Verliersicherung (15a bis 15d), mit der nach einer Montage bzw. Komplettierung alle Bauteile des Ausrücklagers (1a bis 1g) und des Einstellrings (6a) zusammengefügt sind, übergreift.

17. Ausrücklager nach Anspruch 1, wobei die Kugelkalottensegmente (8, 9) unter einem Winkel von ≥ 15° zu einer Symmetrieachse (1 0) verlaufend angeordnet sind.

18. Ausrücklager nach Anspruch 1, wobei die Bauteile, das Gleitelement (5a bis 5e) und der Außenring (3a, 3b) bzw. der Einstellring (6a) im Bereich der Kugelkalottensegemente (8, 9) einen Radius von ≥ 30 mm bilden.

## Claims

1. Release bearing, preferably for a gearshift clutch used in automotive vehicles, said release bearing consisting of a rolling bearing configured as an angular contact bearing that comprises a non-rotatably arranged inner ring (2a, 2b) and a continuous, rotating outer ring (3a, 3b) as also rolling elements (4) guided between these two bearing rings, an adjusting ring (6a) being associated to the outer ring (3a, 3b) and a Belleville spring (11) that can be connected, if need be, to the gearshift clutch being supported on an annular flange of the adjusting ring (6a), so that the components adjusting ring (6a) and outer ring (3a, 3b) are pivotable relative to each other for realising a self-adjusting release bearing (1a to 1g), **characterised in that** a sliding element (5a to 5e) made of a bearing material is inserted between the outer ring (3a, 3b) and the adjusting ring (6a) in a support region (7) having a complementary configuration and forming spherical cup-shaped segments (8, 9), and that the adjusting ring (6a) and the outer ring (3a, 3b) are manufactured as deep-drawn parts of steel made without chip removal and combined with the sliding element (5a to 5e) that is made of a wear-resistant and high temperature resistant plastic material.

2. Release bearing according to claim 1, wherein the sliding element (5a to 5e) is fixed on the outer ring (3a, 3b).

3. Release bearing according to claim 1, wherein the sliding element (5c) bears in the shape of a segment against the carrier element, the outer ring (3a), in the support region (7).

4. Release bearing according to claim 1, wherein circumferentially spaced grooves (41) are provided on the inner side and/or the outer side of the sliding element (5c).

5. Release bearing according to claim 1, wherein the sliding element (5a to 5e) is manufactured by an injection moulding method.

6. Release bearing according to claim 1, wherein the sliding element (5a to 5e) is fixed on the outer ring (3a, 3b) by positive engagement.

7. Release bearing according to claim 1, wherein the sliding element (5a to 5e) is sprayed as a coating onto the outer ring (3a, 3b).

8. Release bearing according to claim 1, wherein the sliding element (5a to 5e), the adjusting ring (6a) and the outer ring (3a, 3b) are made of different materials.

9. Release bearing according to claim 8, wherein the sliding element (5a to 5e) is made of a thermoplastic resin or a thermosetting resin.

10. Release bearing according to claim 1, wherein the sliding element (5a to 5e) comprises additions of carbon fibre, MoS₂ and epoxy resins combined with a thermosetting resin.

11. Release bearing according to claim 1, wherein the base material provided for the sliding element (5a to 5e) is PPA or PA46 mixed with carbon fibres as wear reducers and with PTFE as a friction reducer.

12. Release bearing according to claim 8, wherein the sliding element is made of a ceramic material.

13. Release bearing according to claim 1, wherein the sliding element is fixed on the adjusting ring and the sliding ring (6a) forms a spherical cup-shaped segment (8) of complementary shape in the support region (7).

14. Release bearing according to claim 1, wherein the adjusting ring is a constructed ring consisting of a radially directed annular flange of steel associated to the Belleville spring (11), and the sliding element made of a plastic or a ceramic material is fixed directly on said annular flange.

15. Release bearing according to claim 14 comprising an adjusting ring (6a) made of a plastic or a ceramic material.

16. Release bearing according to claim 1, wherein, in the installed state, a retaining sheet metal (16) or a retaining element (20, 26) fixed on the inner ring (2a, 2b) or on the outer ring (3a, 3b) engages with clearance over an end section (18) of the adjusting ring (6a) for forming an anti-loss device (15a to 15d) with which all the components of the release bearing (1a to 1g) and of the adjusting ring (6a) are assembled together after completion of mounting.

17. Release bearing according to claim 1, wherein the spherical cup-shaped segments (8, 9) extend at an angle of ≥ 15° relative to an axis of symmetry (10).

18. Release bearing according to claim 1, wherein the components sliding element (5a to 5e) and outer ring (3a, 3b) as also adjusting ring (6a) form a radius of ≥ 30 mm in the region of the spherical cup-shaped segments (8, 9).

## Revendications

1. Butée de débrayage, de préférence pour un embrayage utilisé en véhicules automobiles, cette butée consistant d'un roulement configuré sous la forme d'un roulement à contact oblique qui comprend un anneau intérieur (2a, 2b) immobilisé en rotation et un anneau extérieur (3a, 3b) continu rotatif ainsi que des corps roulants (4) guidés entre ces deux anneaux de roulement, un anneau d'ajustage (6a) étant associé audit anneau extérieur (3a, 3b), un ressort Belleville (11) adapté à être relié au besoin à l'embrayage étant supporté contre une bride annulaire de l'anneau d'ajustage (6a), de sorte que les composants l'anneau d'ajustage (6a) et l'anneau extérieur (3a, 3b) peuvent pivoter, l'un par rapport à l'autre, pour réaliser une butée de débrayage à auto-ajustage (1a à 1g), **caractérisé en ce que**, dans une région de support (7) de configuration complémentaire qui forment des segments (8, 9) en forme de calottes sphériques entre l'anneau extérieur (3a, 3b) et l'anneau d'ajustage (6a) est inséré un élément de glissement (5a à 5e) fabriqué en un matériau de roulement, et **en ce que** l'anneau d'ajustage (6a) et l'anneau extérieur (3a, 3b) sont fabriqués sans enlèvement de copeaux en forme de pièces embouties en acier qui sont combinées avec l'élément de glissement (5a à 5e) qui est fabriqué en une matière synthétique anti-usure à haute résistance thermique.

2. Butée de débrayage selon la revendication 1, dans laquelle l'élément de glissement (5a à 5e) est fixé à l'anneau extérieur (3a, 3b).

3. Butée de débrayage selon la revendication 1, dans laquelle l'élément de glissement (5c) s'appuie en forme de segment contre le l'élément de support, c'est-à-dire, contre l'anneau extérieur (3a) dans la région de support (7).

4. Butée de débrayage selon la revendication 1, dont l'élément de glissement (5c) comprend sur son côté intérieur et/ou sur son côté extérieur, des rainures (41) réparties sur sa circonférence.

5. Butée de débrayage selon la revendication 1, dont l'élément de glissement (5a à 5e) est fabriqué par coulage par injection.

6. Butée de débrayage selon la revendication 1, dans laquelle l'élément de glissement (5a à 5e) est fixé à l'anneau extérieur (3a, 3b) par concordance de forme.

7. Butée de débrayage selon la revendication 1, dans laquelle l'élément de glissement (5a à 5e) est projeté en forme de revêtement sur l'anneau extérieur (3a, 3b).

8. Butée de débrayage selon la revendication 1, dans laquelle l'élément de glissement (5a à 5e) et l'anneau d'ajustage (6a) ainsi que l'anneau extérieur (3a, 3b) sont fabriqués en des matériaux différents.

9. Butée de débrayage selon la revendication 8, dans laquelle l'élément de glissement (5a à 5e) est fabriqué en une résine thermoplastique ou une résine thermodurcissable.

10. Butée de débrayage selon la revendication 1, dont l'élément de glissement (5a à 5e) comprend des additifs de fibres de charbon, de MoS₂ et de résines époxy combinés avec de la résine thermodurcissable.

11. Butée de débrayage selon la revendication 1, dans laquelle le matériau de base prévu pour l'élément de glissement (5a à 5e) est PPA ou PA46 qui est mélangé avec des fibres de charbon en tant que moyen anti-usure et avec du PTFE en tant que moyen anti-friction.

12. Butée de débrayage selon la revendication 8, dont l'élément de glissement est fabriqué en céramique.

13. Butée de débrayage selon la revendication 1, dans laquelle l'élément de glissement est fixé à l'anneau d'ajustage et que l'anneau d'ajustage (6a) forme dans la région de support (7) un segment (8) en forme de calotte sphérique de configuration complémentaire.

14. Butée de débrayage selon la revendication 1, munie d'un anneau d'ajustage construit comprenant une bride annulaire en acier qui est radialement orientée et associée au ressort Belleville (11), sur laquelle bride annulaire est fixé directement l'élément de glissement fait en une matière synthétique ou en céramique.

15. Butée de débrayage selon la revendication 14, qui comprend un anneau d'ajustage (6a) fait en une matière synthétique ou en céramique.

16. Butée de débrayage selon la revendication 1, dans laquelle, dans la position de montage, une tôle de retenue (16) ou un élément de retenue (20, 26) fixés à l'anneau intérieur (2a, 2b) ou à l'anneau extérieur (3a, 3b) s'engage avec du jeu par dessus d'une section terminale (18) de l'anneau d'ajustage (6a) pour former un dispositif anti-perte par l'intermédiaire duquel tous les composants de la butée de débrayage (1a à 1g) et de l'anneau d'ajustage (6a) sont réunis, l'un à l'autre, après achèvement du montage.

17. Butée de débrayage selon la revendication 1, dans laquelle les segments (8, 9) en forme de calottes sphériques s'étendent avec un angle de ≥ 15° par rapport à un axe de symétrie (10).

18. Butée de débrayage selon la revendication 1, dans laquelle les composants l'élément de glissement (5a à 5e) et l'anneau extérieur (3a, 3b) ainsi que l'anneau d'ajustage (6a) forment, dans la région des segments (8, 9) en forme de calottes sphériques, un rayon de ≥ 30 mm.
